(19)

Europäisches
Patentamt
European
Patent Office
Office européen
des brevets

(11) **EP 4 644 986 A1**

(12) **EUROPEAN PATENT APPLICATION**
published in accordance with Art. 153(4) EPC

(43) Date of publication:
 **05.11.2025 Bulletin 2025/45**

(21) Application number: **23912533.9**

(22) Date of filing: **02.11.2023**

(51) International Patent Classification (IPC):
 *G02F 1/153* (2006.01)  *G02F 1/1514* (2019.01)

(52) Cooperative Patent Classification (CPC):
 **G02F 1/1514; G02F 1/153**

(86) International application number:
 **PCT/KR2023/017361**

(87) International publication number:
 **WO 2024/143853 (04.07.2024 Gazette 2024/27)**

(84) Designated Contracting States:
 **AL AT BE BG CH CY CZ DE DK EE ES FI FR GB GR HR HU IE IS IT LI LT LU LV MC ME MK MT NL NO PL PT RO RS SE SI SK SM TR**
 Designated Extension States:
 **BA**
 Designated Validation States:
 **KH MA MD TN**

(30) Priority: **30.12.2022 KR 20220190916**

(71) Applicant: **Dongjin Semichem Co., Ltd.**
 **Incheon 22824 (KR)**

(72) Inventors:
 • BAEK, Jong Gyu
  Incheon 22824 (KR)
 • SONG, Gi Hwan
  Incheon 22824 (KR)

(74) Representative: **Grünecker Patent- und Rechtsanwälte PartG mbB Leopoldstraße 4 80802 München (DE)**

(54) **ELECTROCHROMIC DEVICE**

(57)  An embodiment of the present invention provides an electrochromic device comprising a substrate and electrochromic layers, wherein the electrochromic layers include an oxidative chromic layer and a reductive chromic layer, and the oxidative chromic layer and the reductive chromic layer are arranged in contact with each other in at least one region.

## FIG. 1

EP 4 644 986 A1

## Description

### Technical Field

The disclosure relates to an electrochromic device.

### Background Art

A typical electrochromic device includes an electrochromic (EC) electrode layer and a counter electrode (CE) layer, which are separated by an ionically conductive layer which is highly resistant to electrons and highly conductive to ions.

Electrochromic devices may be fabricated using various methods, in which, for example, methods including a layer formation process using adsorption have problems such as complicated and expensive fabrication processes, as well as limitations such as inapplicability to flexible devices due to required high-temperature heat treatments.

Furthermore, solutions containing an electrochromic material dissolved in an electrolyte solution have limitations in improving the precise control capability and stability of devices.

### Disclosure of Invention

### Technical Problem

The disclosure provides an electrochromic device which is easier to fabricate and has improved memory performance.

### Solution to Problem

In an embodiment of the disclosure, provided is an electrochromic device including: a substrate and electrochromic layers, wherein the electrochromic layers include an oxidation chromic layer and a reduction chromic layer, and the oxidation chromic layer and the reduction chromic layer are disposed to be in contact with each other in at least one region.

In an embodiment of the disclosure, at least one of the oxidation chromic layer and the reduction chromic layer may each include a plurality of electrochromic nanoparticles.

In an embodiment of the disclosure, at least one of the oxidation chromic layer and the reduction chromic layer may each further include an electrochromic material.

In an embodiment of the disclosure, in at least one of the oxidation chromic layer or the reduction chromic layer, the electrochromic material may be positioned between at least two adjacent electrochromic nanoparticles of the plurality of electrochromic nanoparticles, or the plurality of electrochromic nanoparticles may be coated with the electrochromic material.

In an embodiment of the disclosure, each of the plurality of electrochromic nanoparticles may be placed to contact the electrochromic material placed between the plurality of electrochromic nanoparticles.

In an embodiment of the disclosure, at least one of the oxidation chromic layer and the reduction chromic layer may each further include an electrolyte.

In an embodiment of the disclosure, at least one of the oxidation chromic layer and the reduction chromic layer including the electrolyte may each be in the form of a flexible thin film.

In an embodiment of the disclosure, in at least one of the oxidation chromic layer or the reduction chromic layer, the electrolyte may be mixed with the electrochromic nanoparticles and the electrochromic material.

In an embodiment of the disclosure, at least one of the oxidation chromic layer and the reduction chromic layer may each include a polymer cage.

In an embodiment of the disclosure, the electrochromic device may include an electrolyte, electrochromic nanoparticles, and an electrochromic material in the polymer cage.

In an embodiment of the disclosure, the electrochromic device may further include a plurality of polymer chains in the polymer cage, with empty spaces being provided between the plurality of polymer chains.

In an embodiment of the disclosure, at least one of the electrolyte, the electrochromic material, and the electrochromic nanoparticles may be placed in the empty spaces, or at least one of the electrolyte, the electrochromic material, and the electrochromic nanoparticles may be placed to be in contact with the plurality of polymer chain.

In an embodiment of the disclosure, the thicknesses of the electrochromic layers may range from 2 to 50 $\mu$m.

In another embodiment of the disclosure, provided is a method of fabricating an electrochromic device, the method including: coating a plurality of nanoparticles with an electrochromic material; preparing an electrochromic paste by mixing the nanoparticles coated with the electrochromic material and an electrolyte; applying the electrochromic paste to a substrate; and drying the electrochromic paste.

In an embodiment of the disclosure, provided is a method of fabricating an electrochromic device, the method including: coating a plurality of nanoparticles with an electrochromic material; preparing an electrochromic paste in which the nanoparticles coated with the electrochromic material are mixed with an electrolyte; forming electrochromic layers by applying the electrochromic paste to a substrate and an opposing substrate and drying the electrochromic paste; and disposing the substrate and the opposing substrate to face each other and assembling the substrate and the opposing substrate so that the electrochromic layers on the substrate and the opposing substrate are bonded to each other.

## Advantageous Effects of Invention

The electrochromic device of the disclosure may be easier to fabricate and have improved memory performance.

## Brief Description of Drawings

FIG. 1 is a cross-sectional view schematically illustrating an electrochromic device according to an embodiment of the disclosure.
FIG. 2 schematically illustrates a polymer cage of the electrochromic device according to an optional embodiment of the disclosure.
FIG. 3 is a cross-sectional view schematically illustrating an electrochromic device including grid structures according to an optional embodiment of the disclosure.
FIG. 4 illustrates a method of fabricating an electrochromic device according to an embodiment of the disclosure.
FIG. 5 illustrates a method of fabricating an electrochromic device including grid structures according to an optional embodiment of the disclosure.
FIG. 6 illustrates a substrate in a conventional high-temperature process and a substrate in a process according to the disclosure.
FIG. 7 illustrates a transmittance evaluation graph according to changes in the photo-electrode thickness.
FIG. 8 illustrates transmittance observation results according to changes in the photo-electrode thickness.
FIG. 9 illustrates memory effect evaluation results for examples of the disclosure and comparative examples.

## List of Reference Numerals for Major Elements

| | | | |
|---|---|---|---|
| 10, 10': | electrochromic device | | |
| 100: | substrate | 200: | electrode layer |
| 300: | reduction chromic layer | 310: | electrochromic nanoparticle |
| 320: | reduction electrochromic material | | |
| 400: | oxidation chromic layer | 410: | electrochromic nanoparticle |
| 420: | oxidation electrochromic material | | |
| 500: | electrolyte | 600: | grid structure |
| 610: | grid protection layer | 700: | polymer cage |
| 710: | polymer chain | 720: | lithium salt |

## Best Mode for Carrying out the Invention

Embodiments of the disclosure are illustrated in the accompanying drawings. However, the creative concept of the disclosure may be embodied in various forms and should not be interpreted as limited to the embodiments described herein. Rather, these embodiments are provided so that the disclosure will be thorough and complete and will fully convey the concept of the disclosure to a person of ordinary knowledge in the art to which the disclosure belongs. The same reference numerals refer to the same components.

The terminologies used herein are intended to describe particular embodiments only and are not intended to limit the creative concept of the disclosure. The singular forms as used herein are intended to include the plural forms such as "at least one" as well, unless the context clearly indicates otherwise. The "at least one" should not be interpreted as being limited to a single instance. The term "and/or" as used herein includes any combination of one or more of all the listed items. In the detailed description, the terms "includes" and/or "including" specify the existence of the features, regions, integers, steps, operations, components, and/or elements specified, but do not exclude the existence or addition of other features, regions, integers, steps, operations, components, and/or groups thereof.

Herein, an object being referred to as being "on" another object means that the object may be directly on the other object or that an intervening object may be present between the object and the other object.

Throughout the specification, a portion being referred to as being connected (or linked, contacted, or coupled)" to another portion means that the portion is "directly connected" to the other portion or that the portion is "indirectly connected" to the other portion via an intervening member.

Unless otherwise defined, all terms (including technical and scientific terms) used herein have the same meaning as commonly understood by a person of ordinary knowledge in the art to which the disclosure belongs. It will be further understood that terms, such as those defined in commonly used dictionaries, should be interpreted consistently with their meaning in the context of the relevant art and the disclosure, rather than in an idealized or overly formal sense.

Although specific embodiments are described, currently unpredicted, or unpredictable alternatives, modifications, variations, improvements, and substantial equivalents, may arise to the inventors or a person of ordinary knowledge in the art. Therefore, the appended claims, which may be applied and changed, are intended to include all such alternatives, modifications, variations, improvements and substantial equivalents.

In the following embodiments, the terms "first", "second", etc., are only used to distinguish one element from another element, rather than in a limiting sense.

In the following embodiments, the singular forms include the plural forms as well, unless the context clearly indicates otherwise.

In the drawings, the sizes of components may be exaggerated or reduced for ease of description. For example, the size and thickness of each component are shown arbitrarily in the drawings for ease of description, and thus the disclosure is not necessarily limited to what is shown.

In the following embodiments, the X-, Y-, and Z-axes are not limited to the three axes on a Cartesian coordinate system, and may be interpreted in a broad sense including the same. For example, the X-, Y-, and Z-axes may be orthogonal to each other but refer to different directions that are not orthogonal to each other.

In a case in which an embodiment may be implemented differently, a specific process order may differ from the order described. For example, two processes described as occurring in succession may be performed substantially simultaneously or in an order inverse to the order described.

An electrochromic device according to an embodiment of the disclosure includes a substrate and electrochromic layers.

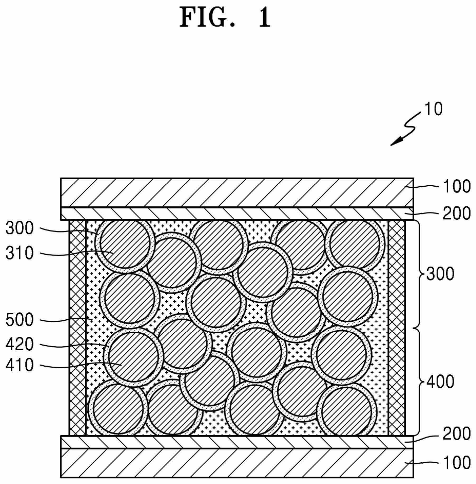

FIG. 1 is a cross-sectional view schematically illustrating an electrochromic device according to an embodiment of the disclosure.

According to FIG. 1, an electrochromic device 10 includes substrates 100, electrode layers 200, and electrochromic layers 300 and 400, wherein the electrochromic layers 300 and 400 include a reduction chromic layer 300 and an oxidation chromic layer 400.

The electrochromic device 10 may include at least one electrode layer 200 provided between the substrates 100 and the electrochromic layers 300 and 400, and the electrode layer 200 may be transparent but is not limited in transparency or color.

The substrates may be formed of various materials. For example, substrates may be formed of glass, ceramics, or other organic materials. In an optional embodiment, the substrates may be formed of a flexible material, such as a material that may be easily curved, bent, folded, or rolled, and may also be formed of ultra-thin glass, metal, or plastic.

The substrates 100 are shown in FIG. 1 as being disposed on opposite sides to face each other, but in another example, a substrate or substrates may be disposed on a single side only.

The electrode layers 200 are provided on the substrates 100.

The electrode layers 200 may include various conductive materials, and may include, for example, an optically transparent conductive material. In an optional embodiment, the electrode layers may include optically transparent conductive oxides, such as indium tin oxide (ITO), fluorine-doped tin oxide (FTO), indium zinc oxide (IZO), zinc oxide (ZnO), indium oxide ($In_xO_y$), indium gallium oxide (IGO), or aluminum zinc oxide (AZO), which are highly light-transmissive.

There may be various processes for forming an electrode layer on a substrate, and the electrode layer may be formed on the substrate using various methods, such as depositing or printing conductive materials.

The electrochromic device according to the disclosure may be fabricated using non-complicated processes without high-temperature processing, as described below, thereby limiting the occurrence of bubbles, and may accordingly include not only conventional substrates but also flexible substrates.

The thicknesses of the electrochromic layers 300 and 400 may range from 2 to 50 $\mu$m, 2 to 40 $\mu$m, 2 to 30 $\mu$m, 2 to 20 $\mu$m, 2 to 10 $\mu$m, 5 to 50 $\mu$m, 5 to 40 $\mu$m, 5 to 30 $\mu$m, 5 to 20 $\mu$m, 5 to 10 $\mu$m, 10 to 50 $\mu$m, 10 to 40 $\mu$m, 10 to 30 $\mu$m, 10 to 20

$\mu m$, 20 to 50 $\mu m$, 20 to 40 $\mu m$, 20 to 30 $\mu m$, 30 to 50 $\mu m$, 30 to 40 $\mu m$, or 40 to 50 $\mu m$.

At least one of the reduction chromic layer 300 and the oxidation chromic layer 400 each includes a plurality of electrochromic nanoparticles 310 or 410. The electrochromic nanoparticles 310 in the reduction chromic layer and the electrochromic nanoparticles 410 in the oxidation chromic layer may be identical or different, and may be used in some modified forms.

The reduction chromic layer 300 and the oxidation chromic layer 400 may be disposed to be in contact with each other in at least one region. For example, the plurality of electrochromic nanoparticles 310 of the reduction chromic layer 300 and the plurality of electrochromic nanoparticles 410 of the oxidation chromic layer 400 may be in contact with each other, as shown in FIG. 1, but this is not intended to be limiting.

The electrochromic nanoparticles may include oxide-based materials, but are not limited thereto. For example, the electrochromic nanoparticles may include a transition metal or a metallic element from the groups 13 to 16 of the periodic table, such as Al, Ga, In, Sn, Tl, Pb, Bi, and Po, particularly $TiO_2$, $WO_3$, $NiO_xH_y$, $Nb_2O_5$, $V_2O_5$, $MoO_3$, $Al_2O_3$, $SiO_2$, $ZrO_2$, $CeO_2$, ZnO, and $Y_2O_3$.

According to an embodiment of the disclosure, $TiO_2$ may be used for the electrochromic nanoparticles, in which $TiO_2$ has excellent light transmittance for visible light, and in a case in which a voltage is applied, the corresponding material may enable efficient electron transport due to the excellent electrical conductivity. Furthermore, $TiO_2$ has a very large surface area to enable proper adsorption of a large amount of electrochromic material, and the pore structure of $TiO_2$ may be controlled in a relatively easy manner and thus enable pore control to facilitate smooth electrolyte diffusion in a case in which a quasi-solid or solid electrolyte is used, thereby increasing the durability of the device.

The size of the electrochromic nanoparticles may range from 1 to 100 nm, 5 to 50 nm, 5 to 45 nm, 5 to 40 nm, 5 to 35 nm, 5 to 30 nm, 10 to 50 nm, 10 to 45 nm, 10 to 40 nm, 10 to 35 nm, 10 to 30 nm, 15 to 50 nm, 15 to 45 nm, 15 to 40 nm, 15 to 35 nm, 15 to 30 nm, 20 to 50 nm, 20 to 45 nm, 20 to 40 nm, 20 to 35 nm, 20 to 30 nm, 25 to 50 nm, 25 to 45 nm, 25 to 40 nm, 25 to 35 nm, or 25 to 30 nm, desirably from 10 to 30 nm.

At least one of the reduction chromic layer 300 and the oxidation chromic layer 400 may further include an electrochromic material 320 or 420.

The electrochromic material 320 or 420 may be positioned between at least two adjacent electrochromic nanoparticles 310 or 320, or, for example, each of the plurality of electrochromic nanoparticles 310 and 410 may be coated with the electrochromic material 320 or 420, as shown in FIG. 1. Furthermore, the two adjacent electrochromic nanoparticles 310 and 410 may be placed to be in contact with the electrochromic material 320 or 420 positioned between the two adjacent electrochromic nanoparticles.

The electrochromic material may be one or more oxides selected from the group consisting of cobalt (Co), indium (In), iridium (Ir), molybdenum (Mo), nickel (Ni), tungsten (W), vanadium (V), cerium (Ce), manganese (Mn), niobium (Nb), rhodium (Rh), ruthenium (Ru), antimony (Sb), titanium (Ti), zinc (Zn), aluminum (Al), silicon (Si), copper (Cu), iron (Fe), tantalum (Ta), and magnesium (Mg), or

Prussian blue, viologen, Wurster blue, perylene dimide, triethylamine, polyaniline, polypyrrole, polythiophene, carbazole, phenylene vinylene, acetylene, phenylenediamine, phenothiazine, tetrathiafulvalene, or derivatives thereof, but are not limited thereto, and may be appropriately modified depending on whether the electrochromic material is a reduction electrochromic material or an oxidation electrochromic material.

In the electrochromic device 10, at least one of the reduction chromic layer 300 and the oxidation chromic layer 400 may further include an electrolyte 500.

At least one of the oxidation chromic layer 400 and the reduction chromic layer 300 including the above electrolyte 500 each may be in the form of a flexible thin film, but is not limited to this form and may be appropriately modified.

The flexible thin film form may be a cured paste, or may be produced using UV radiation curing by adding a UV-curable agent to a liquid material.

Furthermore, in at least one of the oxidation chromic layer 400 and the reduction chromic layer 300, the electrolyte 500 may be present in a mixed form with the electrochromic nanoparticles 310 or 410 and the electrochromic material 320 or 420.

The electrolyte 500 may be a polymer, but is not limited thereto, and may be a lithium salt electrolyte according to an embodiment.

The electrolyte 500 may further include an oxidizer, a solvent, a polymer, or a photocurable resin.

The oxidizer may be a derivative of ferrocene, polyaniline, polypyrrole, polythiophene, carbazole, phenylene vinylene, acetylene, phenylenediamine, phenothiazine, tetrathiafulvalene, or the like, but is not limited thereto.

The solvent may be benzonitrile, acetylacetone, sulfolane, succinonitrile, propylene carbonate, diethyl carbonate, 3-methoxypropionitrile, ethylene carbonate, dimethyl carbonate, $\gamma$-butyrolactone, tetrahydrofuran, acetylacetone, dimethylformamide, N-methylpyrrolidone, dimethylacetamide, or dimethyl sulfoxide, but is not limited thereto.

In an embodiment of the disclosure, at least one of the oxidation chromic layer and the reduction chromic layer of the electrochromic device each includes a polymer cage, in which the electrolyte, the electrochromic nanoparticles, and the electrochromic material may be included in the polymer cage. Consequently, the electrolyte is not present as a separate layer, and the oxidation chromic layer and the reduction chromic layer may remain in a separated state while in contact with each other.

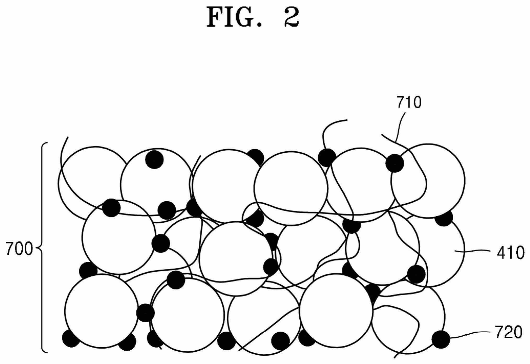

Referring to FIG. 2, in an optional embodiment, a plurality of polymer chains 710 may further be included in the polymer cage 700, and electrochromic nanoparticles 410 and lithium salt 720 may be present in an intertwined and contacting form between the plurality of polymer chains 710. For ease of description, only the electrochromic nanoparticles 410 and the lithium salt 720 are shown in the figure, but an electrolyte and an electrochromic material may also be present.

The plurality of polymer chains 710 may be present in an irregular form in the polymer cage 700, and empty spaces may be present between the plurality of polymer chains 710. One or more of the electrolyte, the electrochromic material, or the electrochromic nanoparticles 410 may be placed in the empty spaces, or one or more of the electrolyte, the electrochromic material, or the electrochromic nanoparticles 410 may be placed to be in contact with the plurality of polymer chains 710.

The polymer chains 710 in the polymer cage 700 may hold the electrolyte, the electrochromic material, and the electrochromic nanoparticles 410 in the polymer cage 700 to prevent interlayer movement of the electrochromic material and the nanoparticles 410, thereby improving the durability of the device. Furthermore, the polymer chains 710, the electrolyte, the electrochromic material, and the electrochromic nanoparticles 410 are placed to be in contact with each other, thereby ensuring that ion conductivity is not impaired by the presence of the polymer and enabling the lithium salt 720 to move smoothly.

The polymer cage 700 may include poly(methyl methacrylate) (PMMA), poly(glycidyl methacrylate) (PGMA), ethylene glycol dimethacrylate (EGDMA), trimethylolpropane triacrylate (TMPTA), tetra(ethylene glycol) diacrylate (TEDGA), polyurethane, acrylic-silicone polymer, or the like, but is not limited thereto, and may also be used in some modified forms.

In this embodiment, the double-layer structure of the oxidation chromic layer and the reduction chromic layer is formed by a single process, thereby reducing fabrication costs, as will be described below. Furthermore, because the electrochromic material is not a solution type in which the electrochromic material is dissolved in an electrolyte solution, the electrochromic material does not freely diffuse in a power-off situation, thereby allowing the fabrication of a thin film having excellent memory performance.

An electrochromic device according to another embodiment of the disclosure may further include grid structures.

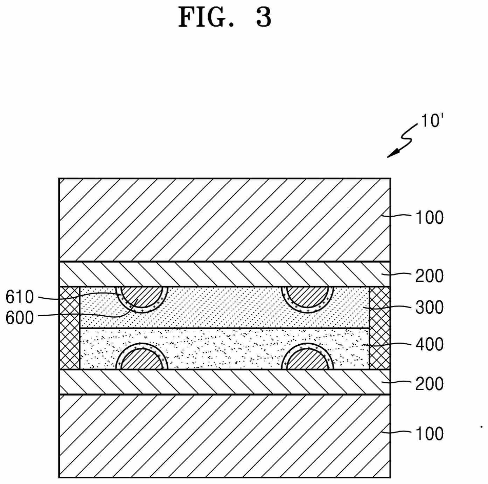

FIG. 3 is a cross-sectional view schematically illustrating an electrochromic device including grid structures according to an optional embodiment of the disclosure.

Referring to FIG. 3, an electrochromic device 10' further includes grid structures 600 disposed on substrates 100. Specifically, the grid structures may be positioned on electrode layers 200.

The electrochromic layers 300 and 400 may be disposed to have regions overlapping the grids in the thickness direction of the grid structures 600, and the electrochromic layers 300 and 400 may be disposed to cover the grid structures 600.

The grid structures may contain a metal such as aluminum (Al), silver (Ag), or copper (Cu), but are not limited thereto, and may be modified as desired.

The grid structures may have various shapes, and may be regularly patterned or irregularly shaped. The grid structures may reduce electrical resistance for electrical connection between the electrochromic layer and the electrode layer.

Each of the grid structures 600 may further include a grid protection layer 610. Further including the grid protection layer 610 may prevent the grid structure from direct contact with the electrochromic paste, thereby preventing the adsorption of the electrochromic nanoparticles to the grid structure.

The grid protection layer may be applied at a thickness of 0.5 to 4 times or 1 to 2 times the thickness of the grid structure, but is not limited thereto, and may be applied in a suitably modified form to prevent the adsorption of the electrochromic nanoparticles described above.

The grid protection layer may include a polymer resin, a UV-curable agent, or an inorganic material. Specifically, the polymer resin may include a silicone polymer, polyarylate, polyimide, polymethyl methacrylate, or polycarbonate. The UV-curable agent may be at least one UV-curable agent of an acrylic curable agent containing a reactive oligomer such as epoxy, polyester, or urethane, an epoxy-based curable agent, or a silicone-based curable agent, and the inorganic material may include a paste of glass frit particles of $V_2O_5$, $Bi_2O_5$, or the like, but these are not intended to be limiting, and some modifications may be used.

The substrates 100, the electrode layers 200, and the electrochromic layers 300 and 400 shown in FIG. 3 may be the same as those of the above-described embodiment or modified as desired, and a more detailed description is omitted.

Another embodiment of the disclosure provides a method of fabricating an electrochromic device.

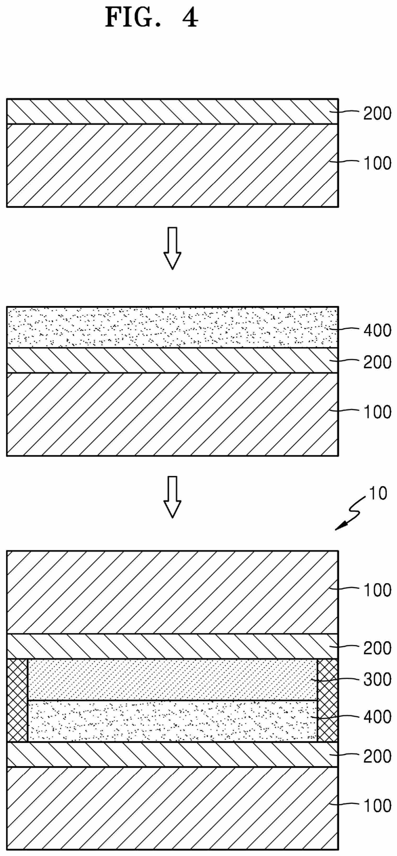

FIG. 4 illustrates a method of fabricating an electrochromic device according to an embodiment of the disclosure.

Referring to FIG. 4, the method of fabricating an electrochromic device according to the disclosure may include the operations of:

coating a plurality of nanoparticles with an electrochromic material;
preparing an electrochromic paste by mixing the nanoparticles coated with the electrochromic material with an electrolyte;
applying the electrochromic paste to a substrate; and
drying the electrochromic paste.

The nanoparticles, the electrochromic material, and the substrate may be applied to be the same as those of the above-described embodiment or modified as desired, and a more detailed description is omitted.

The method of fabricating an electrochromic device according to the disclosure may enable adsorption of the electrochromic material to the nanoparticles by the operation of coating the nanoparticles with the electrochromic material, thereby eliminating the need for an electrochromic material solvent and providing excellent stability.

Using the low-temperature paste in the operation of preparing the electrochromic paste may enable a low-temperature process, which allows for application to flexible materials and reduces fabrication costs. Because a high-temperature process is unnecessary, the occurrence of bubbles may be reduced, and the electrochromic device may be lighter and larger than existing electrochromic devices.

Furthermore, fabricating with the electrochromic paste produced by mixing the nanoparticles and the electrolyte may allow the electrochromic device to be simplified into a double-layer structure including a reduction chromic layer and an oxidation chromic layer, thereby minimizing the fabrication process.

The method of fabricating an electrochromic device according to the disclosure may include the operations of:

coating a plurality of nanoparticles with an electrochromic material;
preparing an electrochromic paste in which the nanoparticles coated with the electrochromic material are mixed with an electrolyte;
forming electrochromic layers by applying the electrochromic paste to a substrate and an opposing substrate and drying the electrochromic paste; and
disposing the substrate and the opposing substrate to face each other and assembling the substrate and the opposing substrate so that the electrochromic layers on the substrate and the opposing substrate are bonded to each other.

The nanoparticles, the electrochromic material, the substrates, the electrochromic layers, and the specific operations of the fabrication method are the same as those of the above-described embodiment or may be modified as desired, and a more detailed description is omitted.

**Mode for the Invention**

The disclosure will be described in detail hereinafter with respect to examples and experimental examples.

However, the examples and experimental examples described below are intended to specifically illustrate an aspect of the disclosure only, and the disclosure is not limited thereto.

**<Example 1> Fabrication of Electrochromic Device**

The method of fabricating an electrochromic device according to the disclosure is shown in FIG. 4.

First, a substrate was prepared, in which an indium tin oxide (ITO) film including a metal mesh was used as the substrate. The substrate was cleaned using a cleaning machine, and then an electrode layer was disposed on the substrate.

Thereafter, the electrode layer was coated with a paste produced by mixing $TiO_2$, a reduction electrochromic material, and an electrolyte, and then the paste was dried to form a reduction chromic layer.

An oxidation chromic layer was formed using an oxidation electrochromic material using the same method, and then the formed reduction and oxidation chromic layers were assembled and sealed to complete an electrochromic device.

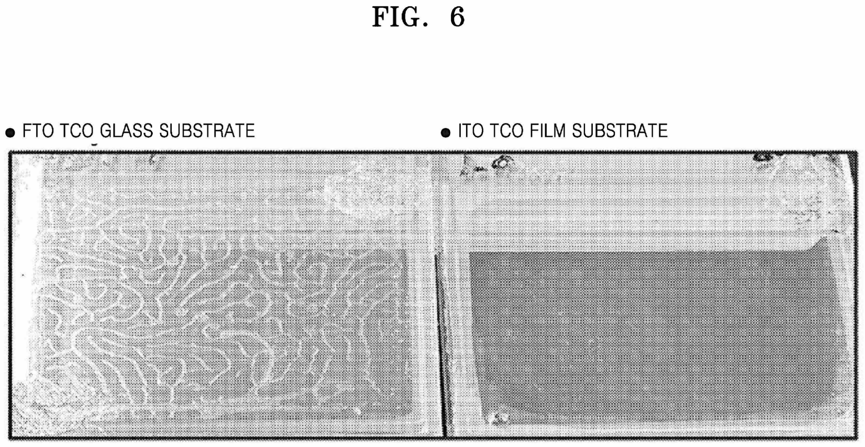

Referring to FIG. 6, cracking due to shrinkage increased during electrolyte curing in a conventional high-temperature process using a glass substrate, but in the process according to the disclosure, cracking and bubbles were easily controlled.

**<Example 2> Fabrication of Electrochromic Device Including Polymer Cage**

First, a substrate was prepared, in which an indium tin oxide (ITO) film including a metal mesh was used as the substrate. The substrate was cleaned using a cleaning machine, and then an electrode layer was disposed on the substrate.

Thereafter, the electrode layer was coated with a polymer cage produced by mixing $TiO_2$, a reduction electro-

chromic material, and an electrolyte, and then the polymer cage was dried to form a reduction chromic layer.

An oxidation chromic layer was formed using an oxidation electrochromic material using the same method, and then the formed reduction and oxidation chromic layers were assembled and sealed to complete an electrochromic device.

### <Example 3> Fabrication of Electrochromic Device Including Grid Structures

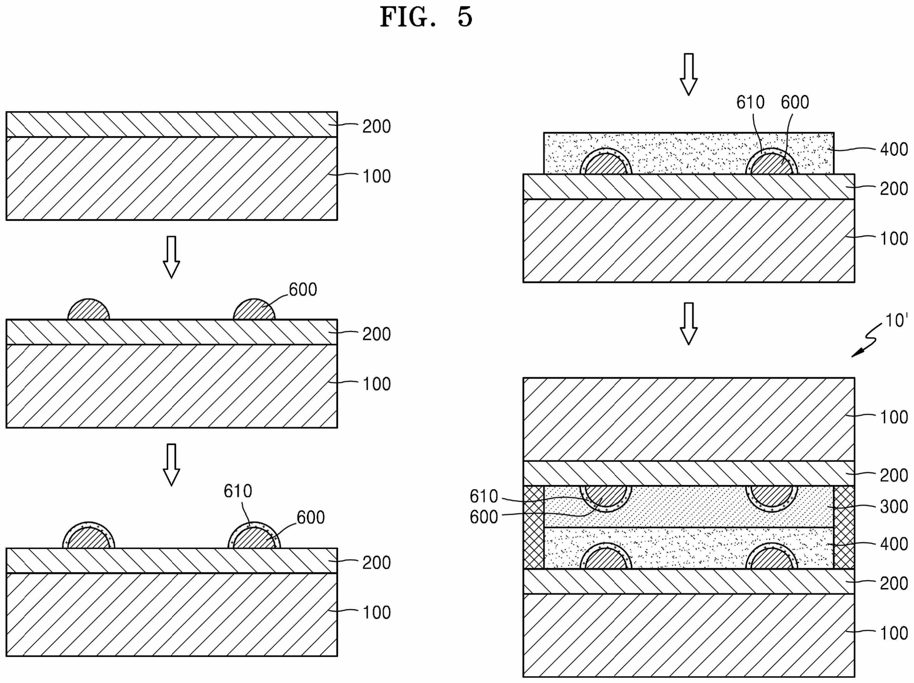

The method of fabricating an electrochromic device including grid structures according to the disclosure is shown in FIG. 5.

First, a substrate was prepared, in which an indium tin oxide (ITO) film including a metal mesh was used as the substrate. The substrate was cleaned using a cleaning machine, and then an electrode layer was disposed on the substrate.

A low-temperature metal grid was screen-printed on the electrode layer and dried. Thereafter, a grid protection layer was screen-printed on the metal grid and cured using a UV irradiator. The grid was coated with a paste produced by mixing $TiO_2$, a reduction electrochromic material, and an electrolyte, and then the paste was dried to form a reduction chromic layer.

An oxidation chromic layer was formed using an oxidation electrochromic material using the same method, and then the formed reduction and oxidation chromic layers were assembled and sealed to complete an electrochromic device.

### <Comparative Example> Fabrication of Electrochromic Device Having All-In-One Structure

TCO substrates were prepared, and then 1 wt% ethyl viologen dibromide without anchoring, 0.6 wt% dimethyl ferrocene, and 98.4 wt% 1 M LiTFSI in propylene carbonate (PC) were prepared as a reduction electrochromic material,

$$V_{loss} = \int \rho_{TCO}*J*x*dx \quad \text{Integration interval ranges from 0 to H} \quad = 1/2\rho_{TCO}*J*H^2$$

$$V_{loss} = \int \rho_{Ag}*J*H/w_{Ag}*xdx \quad \text{Integration interval ranges from 0 to L} \quad = 1/2\rho_{Ag}*J*H*L^2/w_{Ag}$$

an oxidizer, and an electrolyte, respectively, and mixed.

The mixture of the reduction electrochromic material, the oxidizer, and the electrolyte was injected between the substrates to complete an electrochromic device having an all-in-one structure.

### <Experimental Example 1> Evaluation of Chromic Transmittance According to Changes in Photo-Electrode Thickness

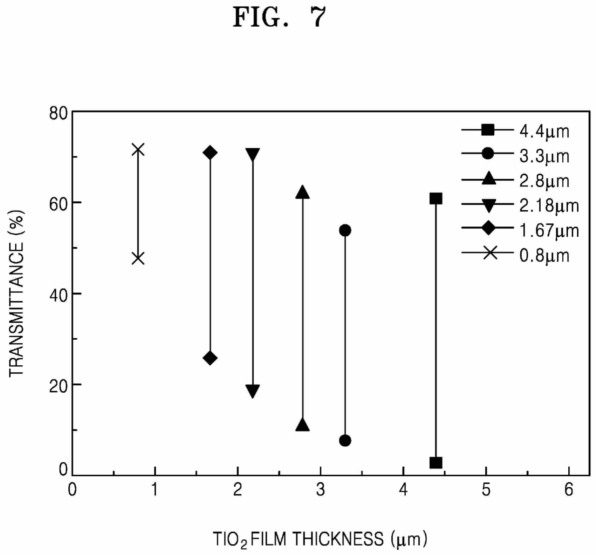

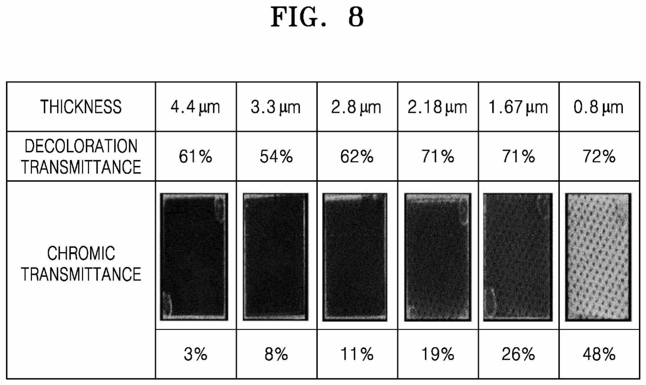

Chromic transmittance according to the thickness change of a reduction chromic layer of a photo-electrode was evaluated using an Alpha Step, an optical microscope, and a scanning electron microscope (SEM). Voltage application conditions were set to -1.3 V for color change and 0.8 V for decoloration. The experimental results are shown in FIGS. 7 and 8.

Referring to FIGS. 7 and 8, as the thickness of the photo-electrode layer increased, the adsorption amount of the reduction-type color-changing material increased, thereby decreasing the transmittance.

### <Experimental Example 2> Evaluation of Coating of Grid Protection Layer

According to an embodiment of the disclosure, an electrochromic device including aluminum (Al) grid structures was coated with a grid protection layer, and voltage drops were calculated. The formula for calculating the voltage drops is as follows:

Integration interval ranges from 0 to H, Integration interval ranges from 0 to L

The calculation results are shown in Table 1 below.

[Table 1]

| | TCO Voltage Drop Distance (cm) | Al Voltage Drop Distance (cm) | Grid Line Width Al (W) (cm) | Cell Width (cm) | TCO Voltage Drop (mV) | Al Voltage Drop (mV) | Total Voltage Drop (mV) |
|---|---|---|---|---|---|---|---|
| Grid 300x300 | 0.0475 | 0.095 | 0.001 | 0.094 | 0.0025 | 9.16 | 9.16 |
| Grid 300x300 | 0.0475 | 0.095 | 0.002 | 0.093 | 0.0025 | 4.58 | 4.58 |
| Grid 300x300 | 0.0475 | 0.095 | 0.005 | 0.090 | 0.0025 | 1.83 | 1.83 |

The experimental results show that coating the grid structures with a grid protection layer may prevent the grid structures from coming into direct contact with the electrochromic paste, thereby preventing the electrochromic nanoparticles from being adsorbed to the grid structures.

**<Experimental Example 3> Evaluation of Voltage Drop**

According to an embodiment of the disclosure, voltage drops were calculated for electrochromic devices including silver (Ag) grid structures. The calculation formula is described above, and the calculation results are shown in Table 2 below.

[Table 2]

| | TCO Voltage Drop Distance (cm) | Ag Voltage Drop Distance (cm) | Grid Line Width Ag (W) (cm) | Cell Width (cm) | TCO Voltage Drop (mV) | Ag Voltage Drop (mV) | Total Voltage Drop (mV) |
|---|---|---|---|---|---|---|---|
| Single-Sided Electrode | 28.5 | 0 | 0 | 28.5 | 900 | 0 | 900 |
| Double-Sided Electrode | 14.25 | 0 | 0 | 28.5 | 225 | 0 | 225 |
| Grid 2x2 | 4.75 | 9.5 | 0.03 | 9.48 | 25 | 31 | 55.5 |
| Grid 10x10 | 1.425 | 2.85 | 0.03 | 2.823 | 2.25 | 9.16 | 11.4 |
| Grid 10x10 | 1.425 | 2.85 | 0.001 | 2.849 | 2.25 | 275 | 277 |

Table 2 shows that the electrochromic devices including grid structures have improved performance compared to the conventional electrochromic devices due to the reduced voltage drop.

**<Experimental Example 4> Memory Effect Evaluation**

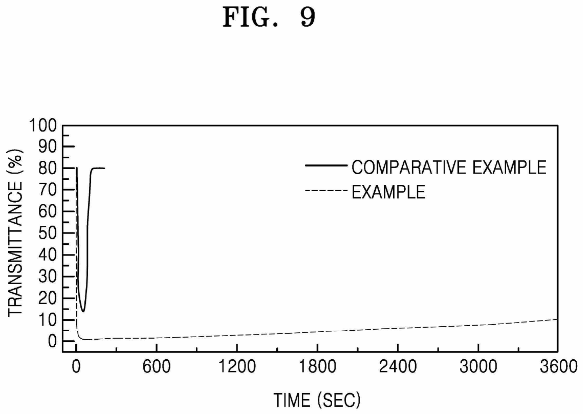

After a color change voltage of -1.3 V was applied for 60 seconds to an electrochromic device according to the disclosure and an all-in-one structure electrochromic device according to a comparative example, memory effects were evaluated. The results are shown in FIG. 9.

Referring to FIG. 9, in a case in which no voltage was applied to the all-in-one structure electrochromic device, the transmittance increased in a few seconds due to the oxidation of the electrochromic material (viologen) by the oxidizer (ferrocene), but in the electrochromic device according to the disclosure, the chromic transmittance decreased to 10% or less over approximately one hour. This demonstrates that the electrochromic device according to the disclosure has a superior memory effect compared to the comparative example.

The above description of the disclosure is provided for illustrative purposes, and a person of ordinary knowledge in the art to which the disclosure belongs will understand that various specific modifications can be easily made without altering the technical concept or the essential features of the disclosure. Therefore, the foregoing embodiments should be understood as being illustrative in all aspects while not limiting. For example, each component that is described as a single entity may be implemented in a distributed form, and similarly, components that are described as distributed may be implemented in a combined form.

The scope of the disclosure is defined by the following claims, and any alterations or modifications conceived from the meaning and scope of the claims and their equivalent concepts shall be interpreted as included in the scope of the disclosure.

**Claims**

1.  An electrochromic device comprising:

    a substrate and electrochromic layers,
    wherein the electrochromic layers comprise an oxidation chromic layer and a reduction chromic layer, and
    the oxidation chromic layer and the reduction electrochromic layer are disposed to be in contact with each other in at least one region.

2.  The electrochromic device of claim 1,
    wherein at least one of the oxidation chromic layer and the reduction chromic layer each comprises a plurality of electrochromic nanoparticles.

3.  The electrochromic device of claim 2,
    wherein at least one of the oxidation chromic layer and the reduction chromic layer each further comprises a plurality of electrochromic materials.

4.  The electrochromic device of claim 3,

    wherein in at least one of the oxidation chromic layer and the reduction chromic layer,
    the electrochromic materials are positioned between at least two adjacent electrochromic nanoparticles of the plurality of electrochromic nanoparticles, or
    the plurality of electrochromic nanoparticles are coated with the electrochromic materials.

5.  The electrochromic device of claim 4,
    wherein each of the plurality of electrochromic nanoparticles is placed to contact the electrochromic materials placed between the plurality of electrochromic nanoparticles.

6.  The electrochromic device of claim 1,
    wherein at least one of the oxidation chromic layer and the reduction chromic layer each further comprises an electrolyte.

7.  The electrochromic device of claim 6,
    wherein at least one of the oxidation chromic layer and the reduction chromic layer comprising the electrolyte each is in a form of a flexible thin film.

8.  The electrochromic device of claim 6,
    wherein in at least one of the oxidation chromic layer and the reduction chromic layer, the electrolyte is mixed with the electrochromic nanoparticles and the electrochromic materials.

9.  The electrochromic device of claim 1,
    wherein at least one of the oxidation chromic layer and the reduction chromic layer each comprises a polymer cage.

10. The electrochromic device of claim 9,
    comprising an electrolyte, electrochromic nanoparticles, and an electrochromic material in the polymer cage.

11. The electrochromic device of claim 10,
    further comprising a plurality of polymer chains in the polymer cage, with empty spaces being provided between the plurality of polymer chains.

12. The electrochromic device of claim 11,

    wherein at least one of the electrolyte, the electrochromic material, and the electrochromic nanoparticle is placed in the empty spaces, or
at least one of the electrolyte, the electrochromic material, and the electrochromic nanoparticles is placed to be in contact with the plurality of polymer chain.

13. The electrochromic device of claim 1,
wherein thicknesses of the electrochromic layers range from 2 to 50 $\mu$m.

14. A method of fabricating an electrochromic device, the method comprising:

coating a plurality of nanoparticles with an electrochromic material;
preparing an electrochromic paste by mixing the nanoparticles coated with the electrochromic material and an electrolyte;
applying the electrochromic paste to a substrate; and
drying the electrochromic paste.

15. The method of claim 14, comprising:

coating a plurality of nanoparticles with an electrochromic material;
preparing an electrochromic paste in which the nanoparticles coated with the electrochromic material are mixed with an electrolyte;
forming electrochromic layers by applying the electrochromic paste to a substrate and an opposing substrate and drying the electrochromic paste; and
disposing the substrate and the opposing substrate to face each other and assembling the substrate and the opposing substrate so that the electrochromic layer on the substrate and the electrochromic layer on the opposing substrate are bonded to each other.

FIG. 1

# FIG. 2

FIG. 3

# FIG. 4

FIG. 5

## FIG. 6

● FTO TCO GLASS SUBSTRATE          ● ITO TCO FILM SUBSTRATE

EP 4 644 986 A1

FIG. 7

# FIG. 8

| THICKNESS | 4.4 μm | 3.3 μm | 2.8 μm | 2.18 μm | 1.67 μm | 0.8 μm |
|---|---|---|---|---|---|---|
| DECOLORATION TRANSMITTANCE | 61% | 54% | 62% | 71% | 71% | 72% |
| CHROMIC TRANSMITTANCE | 3% | 8% | 11% | 19% | 26% | 48% |

# FIG. 9

## INTERNATIONAL SEARCH REPORT

| International application No. |
|---|
| **PCT/KR2023/017361** |

**A. CLASSIFICATION OF SUBJECT MATTER**

**G02F 1/153**(2006.01)i; **G02F 1/1514**(2019.01)i

According to International Patent Classification (IPC) or to both national classification and IPC

**B. FIELDS SEARCHED**

Minimum documentation searched (classification system followed by classification symbols)

G02F 1/153(2006.01); C09K 9/00(2006.01); G02F 1/15(2006.01); G02F 1/1516(2019.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전기 변색(electrochromic), 산화(oxidation), 환원(reduction), 전해질(electrolyte), 나노 입자(nanoparticle), 고분자(high molecule polymer), 사슬(chain), 케이지(cage)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2022-0135576 A (SKC CO., LTD.) 07 October 2022 (2022-10-07)<br>See paragraphs [0038], [0040]-[0041], [0082], [0088] and [0090]-[0095]; and figures 3-5. | 1-13,15 |
| Y | KR 10-2017-0104944 A (LG CHEM, LTD.) 18 September 2017 (2017-09-18)<br>See paragraph [0010]; and figure 1. | 1-13 |
| X | KR 10-2018-0065157 A (LG DISPLAY CO., LTD.) 18 June 2018 (2018-06-18)<br>See paragraphs [0053]-[0058], [0131], [0137] and [0141]; and figures 1-2. | 14 |
| Y | | 2-8,15 |
| Y | KR 10-2019-0008764 A (LG DISPLAY CO., LTD.) 25 January 2019 (2019-01-25)<br>See paragraph [0037]. | 11-12 |
| A | JP 2018-005180 A (RICOH CO., LTD.) 11 January 2018 (2018-01-11)<br>See paragraphs [0006]-[0087]; and figure 1. | 1-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 February 2024** | **07 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2023/017361** |

| Patent document cited in search report | | | Publication date (day/month/year) | Patent family member(s) | | | Publication date (day/month/year) |
| --- | --- | --- | --- | --- | --- | --- | --- |
| KR | 10-2022-0135576 | A | 07 October 2022 | KR | 10-2520076 | B1 | 10 April 2023 |
| | | | | WO | 2022-211186 | A1 | 06 October 2022 |
| KR | 10-2017-0104944 | A | 18 September 2017 | CN | 108369363 | A | 03 August 2018 |
| | | | | CN | 108369363 | B | 07 May 2021 |
| | | | | KR | 10-2010753 | B1 | 14 August 2019 |
| | | | | US | 10877348 | B2 | 29 December 2020 |
| | | | | US | 2018-0373108 | A1 | 27 December 2018 |
| KR | 10-2018-0065157 | A | 18 June 2018 | CN | 108164508 | A | 15 June 2018 |
| | | | | CN | 108164508 | B | 08 June 2021 |
| | | | | KR | 10-1957151 | B1 | 19 June 2019 |
| | | | | US | 10196379 | B2 | 05 February 2019 |
| | | | | US | 2018-0155321 | A1 | 07 June 2018 |
| KR | 10-2019-0008764 | A | 25 January 2019 | KR | 10-2470079 | B1 | 22 November 2022 |
| JP | 2018-005180 | A | 11 January 2018 | None | | | |

Form PCT/ISA/210 (patent family annex) (July 2022)